# EUROPÄISCHE PATENTANMELDUNG

(11) **EP 1 420 309 A2**
(43) Veröffentlichungstag der Anmeldung: **19.05.2004**
(21) Anmeldenummer: 03021799.6
(22) Anmeldetag: 26.09.2003
(51) Int. Cl.: G05B 19/418

(54) **Steuerungssystem für Kunststoff verarbeitende Maschine**

(30) Priorität: 02.11.2002 DE 10250972; 25.01.2003 DE 10302878
(71) Anmelder: Mannesmann Plastics Machinery GmbH, 80997 München (DE)
(72) Erfinder: Fischbach, Gunther, 82256 Fürstenfeldbruck (DE); Melkus, Andreas, 5110 Oberndorf (AT)
(74) Vertreter: Zollner, Richard

(57) **Zusammenfassung**

Die Erfindung betrifft ein Steuerungssystem für eine Kunststoff verarbeitende Maschine mit mindestens einer zentralen Verarbeitungseinheit (10, 10') mit einem Realzeitbetriebssystem, wobei die zentrale Verarbeitungseinheit (10, 10') über ein Bussystem (16, 16') mit Aktoren und/oder Sensoren (S1, S2 ... Sn) verbunden ist und zumindest ein Aktor und/oder ein Sensor auf eine schnell veränderliche Größe mit hoher Auflösung gerichtet ist.

Um die erste zentrale Verarbeitungseinrichtung von übermäßigen Steuerungs- oder Kommunikationsaufgaben zu entlasten wird vorgeschlagen (i) eine erste Vorverarbeitungseinheit zu verwenden, welche für mehrere Sensoren und/oder Aktoren die Signalvorverarbeitung etc. übernimmt oder eine weitere Vorverarbeitungseinheit vorzusehen, welche die zentrale Verarbeitungseinrichtung unmittelbar von der Buskommunikation entlastet.

## Beschreibung

Die Erfindung betrifft ein Steuerungssystem von kunststoffverarbeitenden Maschinen und Handhabungsgeräte dafür, insbesondere ein Steuerungssystem von kunststoffverarbeitenden Maschinen mit seriellen Bus-Systemen und Realzeitanforderung gemäß dem Oberbegriff des Anspruchs 1.

Steuerungssysteme mit digitaler Peripherie für kunststoffverarbeitende Maschinen benutzen Bus-Systeme, insbesondere serielle Bus-Systeme, mit Realzeitanforderung zur Kommunikation zwischen Sensoren oder/und Aktoren und einer zentralen Prozessoreinheit (CPU), nachfolgend auch zentrale Verarbeitungseinheit genannt. Aufgrund des intensiven Wettbewerbs verbessert sich das Preis-, Leistungsverhältnis der CPU-Einheiten relativ schnell. Dagegen ist der Leistungszuwachs realzeitfähiger, serieller Bus-Systeme deutlich geringer. Darüber hinaus werden insbesondere beim Einsatz digitaler Sensoren oder Aktoren oft komplexe Protokolle abgearbeitet, um z. B. die Kalibrierung, die Herstelleridentifikation oder Treiberanpassung verschiedener Hersteller durchführen zu können. Durch die steigende Komplexität erfordern diese Programme eine größere Bandbreite der Bus-Systeme und mehr CPU-Ressourcen, wobei eine Abbildung von Systemfunktionen bei kleinen Stückzahlen mit einer getrennten CPU/RAM-Konfiguration wirtschaftlich nicht vertretbar ist.

Aus der DE 199 58 790 C2 ist eine Maschine zur Herstellung von Teilen aus Kunststoff oder Gummi bekannt, bei der eine Regel- oder Steuervorrichtung mindestens in eine erste und eine zweite Funktionseinheit aufgeteilt ist. Die erste Funktionseinheit übernimmt eine Temperatur-Istwerterfassung und die zweite Funktionseinheit die Regel/Steuerung und Ausgabe der Ansteuersignale. In der DE 199 58 790 C2 ist die Aufgabe gestellt, ein dezentrales Eingangs-/Ausgangssystem zu schaffen, das keinen zusätzlichen Platzbedarf und Konstruktionsaufwand benötigt. Überdies soll zur Kosteneinsparung der Verdrahtungsaufwand minimiert werden. Zur Lösung dieses Problems wurde insbesondere ein Teil der Funktionseinheit mit Regelvorrichtung in einem Stecker realisiert, der über einen Feldbus, z. B. einen CAN-Bus, mit der eigentlichen zentralen Steuerung verbunden ist. Die im Stecker enthaltene Elektronik kann beispielsweise einen ASIC (anwendungsspezifische integrierte Schaltung), einen Mikroprozessor und eine Spannungsversorgung umfassen. Dabei kann die Messwertumwandlung von analogen Signalen zu digitalen Werten von dem ASIC vorgenommen werden. Der Mikroprozessor steuert diesen ASIC dabei an und führt die Berechnung, Linearisierung, Kaltstellkompensation und Weitergabe an den Feldbuscontroller durch.

Über die Verwendung von Thermoelementen als Sensoren hinaus, ist in der DE 199 58 790 C2 angemerkt, dass zusätzliche, digitale Ausgänge bei der Steuerung vorgesehen sein können, die mit anderen Sensoren, z. B. für Kernzüge, wie Grenzschalter oder Näherungsschalter verbunden sind.

Die in der DE 199 58 790 C2 erwähnten Sensoren oder Aktoren (z. B. Heizbänder) stellen allesamt Bauteile dar, die relativ langsam agieren und in der Regel keine hohe Auflösung benötigen.

Das Problem bei der vorliegenden Erfindung beschäftigt sich dagegen mit der relativ hohen Auslastung von zentralen Prozessoreinheiten durch die Buskommunikation insbesondere bei schnell veränderlichen Größen (z. B. schnell veränderlichen mechanischen Größen) mit hoher Auflösung. Bei der Verwendung solcher Sensoren und Aktoren kommt es vor, dass die CPU zu einem erheblichen Teil (bis zu 40 %) von der Buskommunikation einschließlich Aufgaben, wie Signalvorverarbeitung, Treiberanpassung, Kalibrierung etc. beaufschlagt wird. Diese Kapazität geht der zentralen Prozessor- oder Verarbeitungseinheit für die tatsächliche Rechen- und Steueraufgaben verloren.

Die EP 0 917 034 betrifft ein Verfahren zur Fernüberwachung und/oder Fernwartung einer Spritzgießmaschine. Die Spritzgießmaschine ist mit einer SPS mit mindestens einer CPU zur Ansteuerung der Aktuatoren der Spritzgießmaschine in Echtzeit ausgestattet. Zur Fernüberwachung und/oder Fernwartung werden Daten zwischen der Spritzgießmaschine und einem an einem entfernten Ort gelegenen Fernüberwachungsarbeitsplatz übertragen. In der EP 0 917 034 sind mehrere Aktuatoren und Sensoren über Ein- und Ausgänge an die Echtzeitsteuerung angeschlossen. Die Ein- und Ausgänge können eine Digitalkarte oder eine Analogkarte aufweisen. Dass diese Karten mit irgendwelchen Vorverarbeitungseinheiten ausgestattet sind, ist der Anmeldung nicht zu entnehmen. Insgesamt stellen die Einund Ausgänge somit herkömmliche Interface Schnittstellen dar, die bei einer Großzahl von Datenübertragungen erhöhte Anforderungen an die Kommunikationsbandbreite von realzeitfähigen Bussystemen stellen.

Die US 5,901,058 betrifft ein System und ein Verfahren zur Erreichung von heterogenen Datenflüssen in Steuerungssystemen. Dabei ist ein Server unter Zwischenschaltung eines Bussystems mit einer Vielzahl von Controllern verbunden, welche wiederum über ein Bussystem mit einzelnen Input/Output-Stationen arbeiten, welche eine Kommunikation mit Sensoren und Aktuatoren herstellen. Eine direkte Anbindung von einer Mehrzahl von Aktuatoren an einen Input/Output sowie die Verwendung von ASICs oder FPGAs in den Input/Output-Vorrichtungen zur Verringerung der Bandbreitenanforderung ist jedoch nicht erwähnt.

Aufgabe der vorliegenden Erfindung ist es, die Anforderung an die Kommunikationsbandbreite von realzeitfähigen Bussystemen, insbesondere seriellen Bussystemen, in kunststoffverarbeitenden Maschinen bzw. deren Handhabungsgeräten zu verringern, um Rechenkapazitäten bei der CPU frei zustellen.

Diese Aufgabe wird alternativ durch Steuerungssysteme gemäß den Ansprüchen 1 bzw. 4 gelöst. Die weiteren Unteransprüche definieren spezielle Ausgestaltungen.

Bei einem erfindungsgemäßen Steuerungssystem werden die Daten mehrerer Sensoren und/oder Aktoren mit Hilfe frei programmierbarer Gatteranordnungen (sogenannte FPGA's) und/oder anwendungsspezifischer integrierter Schaltungen (sogenannte ASIC's) vorverarbeitet. Dabei handelt es sich zumindest bei einem Sensor oder Aktor um ein Bauelement, das auf eine schnell veränderliche, insbesondere mechanische, Größe mit hoher Auflösung gerichtet ist. Die Synchronisation und Verarbeitung wird erst durch den Einsatz von FPGA's und ASIC's wirtschaftlich sinnvoll, und durch den Stückzahl-abhängigen Einsatz von FPGA's und ASIC's in der Signalvorverarbeitung, bei Systemfunktionen und Kommunikationsaufgaben wird ein Stückzahl-abhängiger, wirtschaftlicher Ausgleich zwischen lokaler Verarbeitungskapazität unter Belastung von Kommunikationsressourcen erzielt. Der Einsatz von ASIC's und FPGA's in erfindungsgemäßer Weise zur Vorverarbeitung entlastet bei voll digitalen und überwiegend digitalen Maschinensteuerungen die Buskommunikation zum Teil erheblich und begünstigt den wirtschaftlichen Einsatz von Einzel-CPUs für Realzeitanwendungen. Die Abschirmung der Kommunikation von lokalen Aufgaben vermeidet dabei, dass in der Realzeit gebundenen Buskommunikation Engstellen entstehen. Dadurch kann bei vorgegebener Bandbreite der Bussysteme, insbesondere der seriellen Bussysteme, eine komplexe Steuerung verwirklicht werden.

Gegenüber der DE 199 58 790 C2 ist es beispielsweise wesentlich aufwendiger, ein 16-Bit oder 21-Bit kodiertes Druck- oder Wegsignal im Millisekundentakt zu verarbeiten als einen digitalen Eingang für einen Kern- oder Grenzschalter abzufragen. Die Geschwindigkeit bei solchen mechanischen, schnell veränderlichen Größen ist in der Regel hundert Mal schneller als dies bei Temperaturänderungen der Fall ist.

Die vorliegende Erfindung wird nachfolgend anhand mehrerer Ausführungsbeispiele dargestellt und beschrieben. Die Zeichnungen zeigen in:
- Fig. 1:: eine schematische Darstellung eines Steuerungssystems für eine kunststoffverarbeitende Maschine nach dieser Erfindung,
- Fig. 2:: eine schematische Darstellung eines weiteren Steuerungssystems für eine kunststoffverarbeitende Maschine nach dieser Erfindung und
- Fig. 3:: eine schematische Darstellung eines dritten Steuerungssystems für eine kunststoffverarbeitende Maschine nach dieser Erfindung.

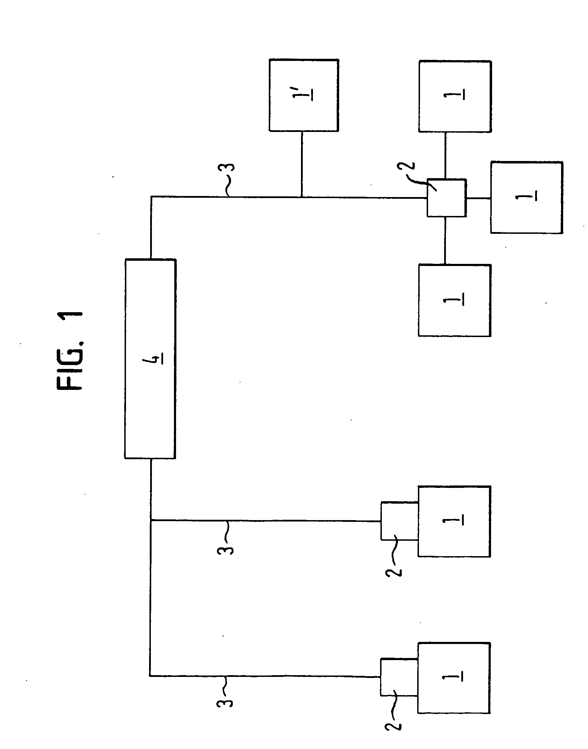

In Fig. 1 ist eine näher erläuterte CPU 4 über ein serielles Bussystem 3 jeweils mit einer ASIC/FPGA-Einheit 2 verbunden. Die ASIC/FPGA- Einheit ist dadurch gekennzeichnet, dass sie eine frei programmierbare Gatteranordnung (FPGA) und/oder eine anwendungsspezifische integrierte Schaltung (ASIC) besitzt, die speziell auf den vorliegenden Fall und die nachgeschalteten Sensoren oder Aktoren ausgerichtet sind. Die ASIC/FPGA-Einheit 2 ist dann mit mindestens einem Sensor und/oder Aktor 1 verbunden und vorverarbeiten deren Signale. Dabei handelt es sich bei zumindest einem Sensor oder Aktor zumindest um eine Baueinheit, die auf eine schnell veränderliche Größe mit hoher Auflösung gerichtet ist. Die Auflösung kann sich beispielsweise im Bereich von 16, 21 oder mehr Bit bewegen. Bei den Größen handelt es sich in der Regel um mechanische Größen wie Druck, Weg, Durchflussmenge oder ähnliche Größen. Natürlich können bei dem Steuerungssystem manche Sensoren - Fig. 1 die Sensor- oder Aktor-Einheit 1' - direkt mit dem seriellen Bussystem 3 verbunden sein. Dazu eignen sich insbesondere solche Bauelemente, welche die Bandbreite des seriellen Bussystems nur geringfügig beanspruchen und deren Daten lokal nicht bearbeiten werden können oder müssen. Solche Sensoren oder Aktoren können direkt über das serielle Bussystem mit der CPU 4 verbunden sein.

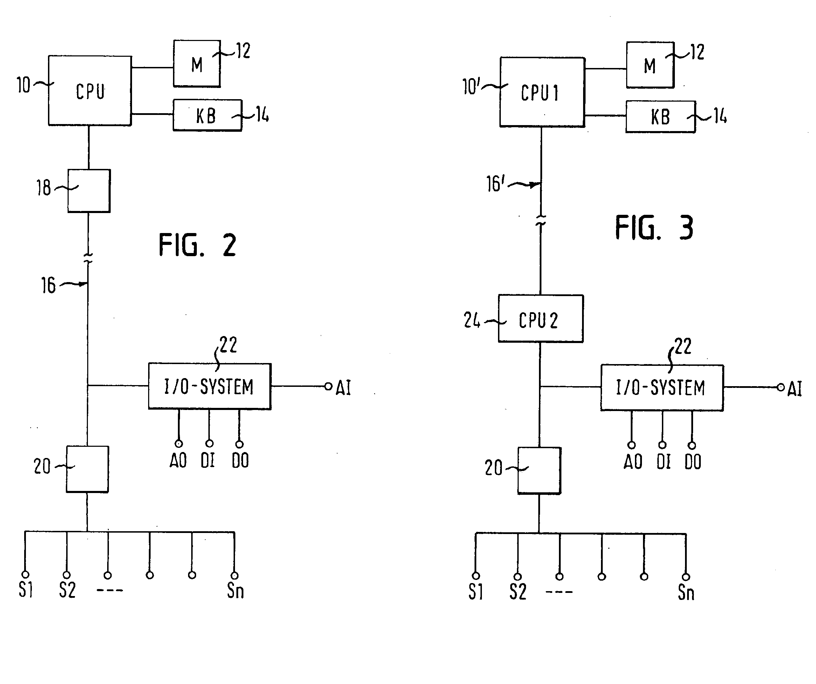

In Fig. 2 ist ein erfindungsgemäßes Steuersystem gemäß einer weiteren Ausführungsform dargestellt. Dabei ist eine CPU-Einheit 10 vorgesehen, welche mit einem Monitor 12 und einem Keyboard 14 zur Ein- bzw. Ausgabe von Daten verbunden ist. Die CPU ist mit einer Vorverarbeitungseinheit 18, nachfolgend zweite Vorverarbeitungseinheit genannt, gekoppelt, welche unmittelbar für eine Entlastung der CPU von der Buskommunikation sorgt. Durch die Verwendung dieser zweiten Vorverarbeitungseinheit 18 wirken sich die Wartezyklen, die für die Busantwort eingehalten werden müssen, nicht nachteilig auf die zur Verfügung stehende CPU-Kapazität aus. Die zweite Vorverarbeitungseinheit 18 umfasst ebenfalls einen ASIC oder eine FPGA, die entsprechend zur Kommunikation ausgestaltet sind.

Die zweite Vorverarbeitungseinheit 18 ist vorliegend über ein serielles Bussystem 16 mit einer ersten Vorverarbeitungseinheit 20 einerseits sowie einem I/O-System 22 verbunden. An der ersten Vorverarbeitungseinheit 20, welche wiederum zumindest einen ASIC und/oder FPGA umfasst, sind mehrere Sensoren oder Aktoren angeschlossen. Vorliegend sind n-Bauelemente S1 bis Sn dargestellt, die mit der ersten Vorverarbeitungseinheit 20 unmittelbar verbunden sind. Dabei kann es sich bei diesen Bauelementen um Sensoren und/oder Aktoren handeln. Kennzeichend vorliegend ist, dass an die erste Vorverarbeitungseinheit 20 in jedem Fall mehrere Sensoren oder Aktoren S1-Sn angeschlossen sind, wobei zumindest ein Sensor oder Aktor auf eine schnell veränderliche Größe, insbesondere eine schnell veränderliche mechanische Größe, wie ein Drucksignal, ein Wegsignal, ein Volumenstromsignal etc. mit hoher Auflösung gerichtet ist. Gerade solche schnell veränderlichen Größen mit hoher Auflösung bedingen eine hohe Buskommunikation, welche die zentrale Verarbeitungseinheit ohne Vorschaltung einer entsprechenden Vorverarbeitungseinheit kapazitätsmäßig belasten würden.

Natürlich können auch mehrere Vorverarbeitungseinheiten 20 an das serielle Bussystem 16 angeschlossen werden. In Fig. 2 ist lediglich eine solche Vorverarbeitungseinheit dargestellt. Zusätzlich ist noch ein Ein- und Ausgabesystem (I/O-System) 22 mit analogen Ein- und Ausgängen (AI, AO) und digitalen Ein- und Ausgängen (DI, DO) vorgesehen.

Die weitere Ausführungsform in Fig. 3 unterscheidet sich gegenüber derjenigen in Fig. 2 lediglich in zwei Details. Anstatt der zweiten Vorverarbeitungseinheit 18 wird nach dem Bussystem 16', bei dem es sich um SCSI-Bus handelt, eine zweite CPU-Einheit (CPU 2) 24 vorgesehen. Die nunmehr mit der Bezugsziffer 10' erste CPU-Einheit (CPU 1) ist mit der zweiten CPU-Einheit 24 unmittelbar über den seriellen Bus 16' verbunden. Bei dieser "2-CPU-Steuerung" wird die Buskommunikation insbesondere durch Einsatz zweiten CPU 24 reduziert, welche die nur die für die eigentliche Steuerung notwendigen Signale über den seriellen Bus 16' an die erste CPU 10' weitergibt bzw. von dieser empfängt.

Wiederum wird jedoch in der ersten Vorverarbeitungseinheit 20 die Steuerung und Kommunikation mit den Sensoren bzw. Aktoren S1-Sn betrieben, so dass die Kommunikation zwischen der ersten Vorverarbeitungseinheit 20 und der zweiten CPU 24 relativ gering gehalten werden kann. Auch bei dieser Ausführungsform ist zumindest einer der Sensoren oder Aktoren auf eine schnell veränderliche Größe mit hoher Auflösung gerichtet.

Durch die erfindungsgemäße Vorbearbeitung der Signale bzw. Daten mittels der ASIC/FPGA-Einheiten kann auf die Sensoren/Aktoren eine Rückwirkung erfolgen, ohne dass das serielle Bussysteme in übermäßig großem Umfang für Steuerbefehle und Datenübertragung beansprucht wird. Dadurch können Realzeitanforderungen an das Steuersystem besser erfüllt werden. Insbesondere dann, wenn die zeitkritischen Signalauswertungen und Datenberechnungen durch die ASIC/FPGAs erfolgen, die entsprechend auf die Sensoren/Aktoren rückwirken.

Darüber hinaus ist es bei vorgegebener Bandbreite, insbesondere bei seriellen Bussystemen möglich, ein komplexes Steuerungssystem zu verwirklichen, bei dem mehrere Signale und Daten berücksichtigt werden können.

### Bezugszeichenliste

- 1: Sensor / Aktor
- 1': Sensor / Aktor
- 2: ASIC / FPGA
- 3: Bussystem
- 4: CPU

- 10, 10': CPU bzw. CPU1
- 12: Monitor
- 14: Keyboard
- 16, 16': Bussystem (serieller Bus)
- 18: erste Schnittstelle mit ASIC / FPGA
- 20: zweite Schnittstelle mit ASIC / FPGA
- 22: Eingabe-/Ausgabe-Schnittstelle
- 24: CPU2
- AI, AO DI, DO: Analoge und digitale Ein- und Ausgänge
- S1, S2 .. Sn: Sensoren 1 bis n oder Aktoren 1 bis n

## Patentansprüche

1. Steuerungssystem für eine Kunststoff verarbeitende Maschine mit einer zentralen Verarbeitungseinheit (10, 10') mit einem Realzeitbetriebssystem, wobei die zentrale Verarbeitungseinheit (10, 10') über ein Bussystem (16, 16') mit Aktoren und/oder Sensoren (S1, S2 ... Sn) verbunden ist und zumindest ein Aktor und/oder ein Sensor auf eine schnell veränderliche Größe mit hoher Auflösung gerichtet ist, **dadurch gekennzeichnet, dass**
- zumindest eine erste Vorverarbeitungseinheit (20), die zumindest einen ASIC oder FPGA umfasst, vorgesehen ist,
- mehrere Sensoren (S1, S2 ... Sn) und/oder Aktoren, von denen zumindest einer auf eine schnell veränderliche Größe mit hoher Auflösung gerichtet ist, mit der ersten Vorverarbeitungseinheit (20), verbunden sind und
- die erste Vorverarbeitungseinheit (20) über das Bussystem (16, 16') mit der zentralen Verarbeitungseinheit (10, 10') verbunden ist.

2. Steuerungssystem nach Anspruch 1, **dadurch gekennzeichnet, dass** zwischen dem Bussystem (16') und der ersten Vorverarbeitungseinheit (20) eine weitere Verarbeitungseinheit (24) mit einer CPU angeordnet ist.

3. Steuerungssystem nach einem der Ansprüche 1 oder 2, **dadurch gekennzeichnet, dass** unmittelbar an das Bussystem (16) oder an die dem Bussystem (16') nachgeschaltete weitere Verarbeitungseinheit (24) ein I/O-System (22) angeordnet ist.

4. Steuerungssystem nach einem der vorhergehenden Ansprüche, **dadurch gekennzeichnet, dass** die Vorverarbeitungseinheit zur Signalvorverarbeitung, Treiberanpassung, Kalibrierung und dergleichen der Sensoren und/oder Aktoren ausgebildet ist.

5. Steuerungssystem für eine Kunststoff verarbeitende Maschine mit einer zentralen Verarbeitungseinheit (10) mit einem Realzeitbetriebssystem, wobei die zentrale Verarbeitungseinheit (10) über ein Bussystem (16) mit Aktoren und/oder Sensoren (S1, S2 ... Sn) verbunden ist und zumindest ein Aktor bzw. ein Sensor auf eine schnell veränderliche Größe mit hoher Auflösung gerichtet ist, **dadurch gekennzeichnet, dass**. zwischen dem Bussystem (16) und der zentralen Verarbeitungseinheit (10) eine Vorverarbeitungseinheit (18) mit mindestens einem ASIC oder FPGA angeordnet ist.

6. Steuerungssystem nach einem der vorhergehenden Ansprüche, **dadurch gekennzeichnet, dass** als Bussystem ein serieller Bus verwendet ist.

7. Steuerungssystem nach einem der vorhergehenden Ansprüche, **dadurch gekennzeichnet, dass** die zentrale Verarbeitungseinheit (10, 10') eine Eingabeeinrichtung (Keyboard) und einen Monitor (12) umfasst.

8. Steuerungssystem nach einem der vorhergehenden Ansprüche, **dadurch gekennzeichnet, dass** die Vorverarbeitungseinheit zur Entlastung der zentralen Verarbeitungseinheit (10, 10') von der Buskommunikation ausgebildet ist.

9. Steuerungssystem für eine Kunststoff verarbeitende Maschine mit einer zentralen Verarbeitungseinheit (10, 10') mit einem Realzeitbetriebssystem, wobei die zentrale Verarbeitungseinheit (10, 10') über ein Bussystem (16, 16') mit Aktoren und/oder Sensoren (S1, S2 ... Sn) verbunden ist und zumindest ein Aktor und/oder ein Sensor auf eine schnell veränderliche Größe mit hoher Auflösung gerichtet ist, **dadurch gekennzeichnet, dass**
- zumindest eine erste Vorverarbeitungseinheit (20), die zumindest einen ASIC oder FPGA umfasst, vorgesehen ist,
- mehrere Sensoren (S1, S2 ... Sn) und/oder Aktoren, von denen zumindest einer auf eine schnell veränderliche Größe mit hoher Auflösung gerichtet ist, mit der ersten Vorverarbeitungseinheit (20), verbunden sind und
- die erste Vorverarbeitungseinheit (20) über das Bussystem (16, 16') mit der zentralen Verarbeitungseinheit (10, 10') verbunden ist und dass
- zwischen dem Bussystem (16) und der zentralen Verarbeitungseinheit (10) eine Vorverarbeitungseinheit (18) mit mindestens einem ASIC oder FPGA angeordnet ist.
